# EUROPEAN PATENT SPECIFICATION

(11) **EP 2 696 019 B1**
(45) Date of publication and mention of the grant of the patent: **11.03.2015**
(21) Application number: 12768336.5
(22) Date of filing: 22.03.2012
(51) Int. Cl.: E05F 15/603, B60J 5/04, B60J 5/06, B60J 5/10, E05F 15/70

(54) **VEHICLE OPEN/CLOSE BODY OPERATING APPARATUS**
BETRIEBSVORRICHTUNG FÜR EIN FAHRZEUG-ÖFFNUNGS- UND SCHLIESSELEMENT
APPAREIL D'ACTIONNEMENT DE CORPS D'OUVERTURE/FERMETURE DE VÉHICULE

(30) Priority: 06.04.2011 JP 2011084577
(43) Date of publication of application: 12.02.2014
(73) Proprietor: AISIN SEIKI KABUSHIKI KAISHA, Kariya-shi, Aichi-ken 448-8650 (JP)
(72) Inventor: MIYAKE, Yukari, KARIYA-SHI AICHI-KEN 448-8650 (JP); KATSUYAMA, Masayuki, KARIYA-SHI AICHI-KEN 448-8650 (JP); HIROTA, Koichi, KARIYA-SHI AICHI-KEN 448-8650 (JP); ISHIDA, Toshihiko, KARIYA-SHI AICHI-KEN 448-8650 (JP); INOUE, Yuichi, KARIYA-SHI AICHI-KEN 448-8650 (JP)
(74) Representative: Intès, Didier Gérard André
(86) International application number: PCT/JP2012/057381
(87) International publication number: WO 2012/137608

(56) References cited:
- JP-A- 2005 133 529
- JP-A- 2007 327 268
- JP-A- 2009 079 353
- US-A1- 2008 296 926

## Description

### TECHNICAL FIELD

The present invention relates to a vehicle open/close body operating apparatus.

### BACKGROUND ART

A conventional vehicle open/close body operating apparatus is disclosed in, for example, Patent Document 1. The apparatus includes a portable wireless terminal, a vehicle-mounted wireless terminal, and a motion detecting means, which detects conscious motion of a user to selectively open and close an open/close body, which is a slide door or a tail door in this example. The apparatus selectively opens and closes the door based on ID verification result of the portable wireless terminal and the vehicle-mounted wireless terminal, and determination result of the intention of the user to selectively open and close the door determined by the motion detecting means. Thus, even if both hands of the user are full, the user is able to selectively open and close the door without manipulating a door handle with his/her hand.

The motion detecting means includes foot section sensors. One of the foot section sensors is located on the lower surface of a sill cover, which is provided below a door opening on a vehicle side portion. Another foot section sensor is located on the lower surface of a rear bumper provided below a door opening on a vehicle rear portion. The motion detecting means detects a foot of the user put under the lower surface of the vehicle body to selectively open and close door, thereby detecting the conscious motion of the user to selectively open and close the door. Patent Document 1 also proposes to provide a foot light section, which includes a light emitting diode (LED), to light the area corresponding to the detection range of the motion detecting means (foot section sensor).

### PRIOR ART DOCUMENT

### Patent Document

Patent Document 1: Japanese Laid-Open Patent Publication No. 2005-133529

### SUMMARY OF THE INVENTION

### Problems that the Invention is to Solve

The apparatus of Patent Document 1 does not have a function to distinguish between the intention of the user to open the door and the intention of the user to close the door. In particular, when the door is stopped in a half opened state, the apparatus cannot open or close the door in accordance with the original intention of the user.

Accordingly, it is an objective of the present invention to provide a vehicle open/close body operating apparatus that is capable of selectively opening and closing an open/close body in accordance with an intention of a user even when both hands of the user are full.

### Means for Solving the Problems

To achieve the foregoing objective a vehicle open/close body operating apparatus is provided that includes a photoelectric sensor, a drive section, and a control section. The photoelectric sensor is configured to be mounted on a vehicle. The photoelectric sensor can display both of a sign indicating an opening operation and a sign indicating a closing operation of an open/close body of the vehicle by light radiation or light projection. The photoelectric sensor is configured to detect an intention of a user to open or close the open/close body through changes in reflected light associated with blocking of the light radiated or projected to display either of the signs. The drive section is configured to open or close the open/close body. The control section is configured to control the drive section to open or close the open/close body in accordance with the intention of the user detected by the photoelectric sensor.

With this configuration, when the user blocks the light radiated or projected to display the sign in order to open or close the open/close body, the photoelectric sensor detects the intention of the user to open or close the open/close body through changes in the reflected light detected in accordance with blocking of the light. The control section controls the drive section to open or close the open/close body in accordance with the detected intention of the user. In this case, blocking of the light radiated or projected to display the sign can be performed with any region of the body of the user such as a foot or a baggage that the user carries. Thus, even when both hands of the user are full, the open/close body is selectively opened or closed in accordance with the intention of the user.

### EFFECTS OF THE INVENTION

The present invention provides a vehicle open/close body operating apparatus that is capable of selectively opening and closing an open/close body in accordance with an intention of a user even when both hands of the user are full.

### BRIEF DESCRIPTION OF THE DRAWINGS

Figs. 1 (a) and 1 (b) are a side view and a front view illustrating one embodiment of the present invention;
Fig. 2 is a block diagram illustrating the electrical configuration of the embodiment;
Fig. 3 is a schematic diagram illustrating the photoelectric sensors;
Fig. 4 is a flowchart showing the control manner of the embodiment;
Figs. 5(a) and (b) are schematic diagrams illustrating modifications of the photoelectric sensors; and
Fig. 6 is a perspective view illustrating a modification of the present invention.

### MODES FOR CARRYING OUT THE INVENTION

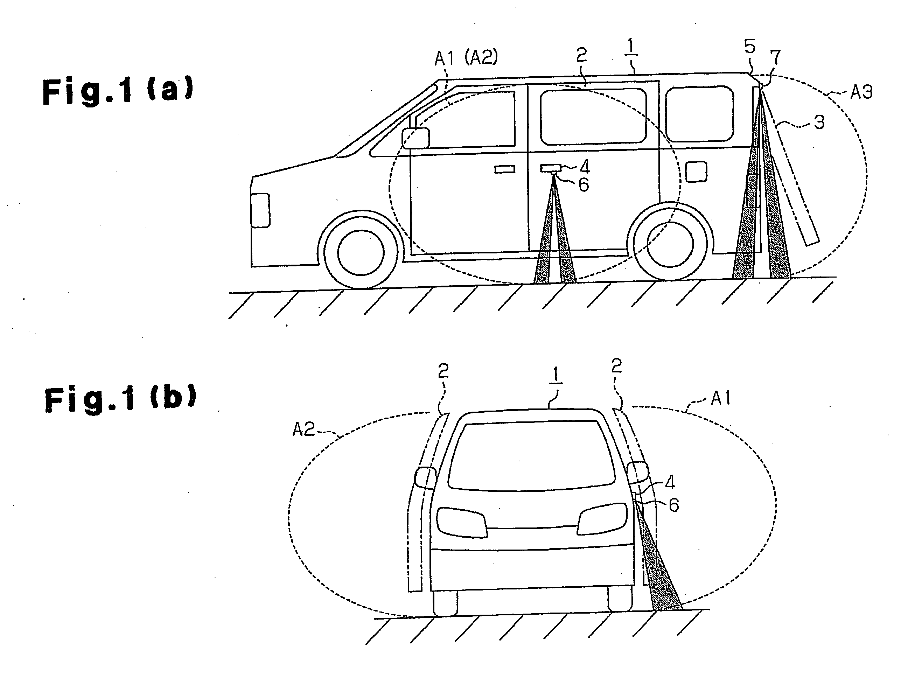

A vehicle open/close body operating apparatus according to one embodiment of the present invention will now be described with reference to Figs. 1 to 4. The present embodiment is an example of application to a power slide door system and a power tail door system installed in a vehicle such as an automobile.

As shown in Figs. 1(a) and 1(b), an open/close body, which is a slide door 2 in this embodiment, is supported on each of the side portions of a vehicle body 1 to be movable in the vehicle fore-and-aft direction via an appropriate support member (not shown). Each slide door 2 selectively opens and closes a door opening as it moves in the vehicle fore-and-aft direction. Furthermore, an open/close body, which is a tail door 3 in this embodiment, is supported on the tail section of the vehicle body 1 via a hinge (not shown) provided on the upper edge of the tail section to be rotational in the vertical direction. The tail door 3 selectively opens and closes the opening for loading and unloading baggage as it rotates in the vertical direction.

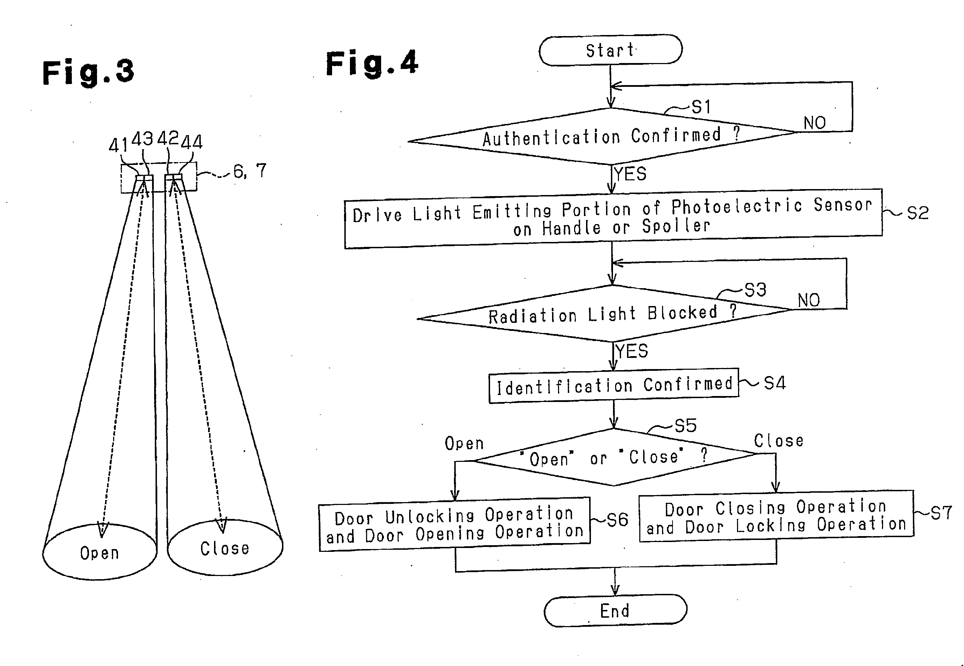

A photoelectric sensor 6, which is, for example, a focused-beam reflective type, is arranged in each of a pair of outside door handles 4 provided on the slide doors 2. A photoelectric sensor 7, which is, for example, a focused-beam reflective type, is arranged in each of a rear spoiler 5, which is located on the rear upper edge of the vehicle body 1, and on both sides of the rear spoiler 5 in the vehicle widthwise direction. The photoelectric sensors 6, 7 are configured to be mounted on the vehicle. As shown in Fig. 3, each of the photoelectric sensors 6, 7 includes a first light emitter 41 for "open" and a second light emitter 42 for "close" configured by, for example, a semiconductor laser, and a first light receiver 43 for "open" and a second light receiver 44 for "close" configured by, for example, a phototransistor. The radiation direction of the first light emitter 41 is set downward, and indicates a character "open" on an irradiation surface such as a ground surface using a character "open" drawn as a sign on a light radiation port (for example, a filter). Similarly, the radiation direction of the second light emitter 42 is set downward, and indicates a character "close" on the irradiation surface such as the ground surface using a character "close" drawn as a sign on a light radiation port (for example, a filter). The first light receiver 43 receives reflected light that is the radiation light of the first light emitter 41 reflected from the ground surface. Similarly, the second light receiver 44 receives reflected light that is the radiation light of the second light emitter 42 reflected from the ground surface.

The light receiving level of the light receivers 43, 44 for receiving the reflected light changes due to changes in the reflection position of the radiation light or the reflection coefficient of an object that reflects the radiation light. Basically, if the reflection coefficient of the object that reflects the radiation light is fixed, the shorter the distance between the light radiation port of the light emitters 41, 42 and the reflection position, the greater the light receiving level of the light receivers 43, 44 for receiving the reflected light becomes. If the distance between the light radiation port of the light emitters 41, 42 and the reflection position of the radiation light is fixed, the greater the reflection coefficient of the object that reflects the radiation light, the greater the light receiving level of the light receivers 43, 44 for receiving the reflected light becomes.

As shown with patterns in Fig. 1, in the photoelectric sensor 6 provided in each outside door handle 4, the optical axes of the first light emitter 41 and the second light emitter 42 are set such that the characters "open" and "close" are displayed on the ground surface outward of the side design surface of the vehicle body 1 (the outside surface of the door panel). This is to prevent each slide door 2 from interfering with the object (the body of or baggage carried by the user) that blocks the radiation light particularly when the slide door 2 is opened from the fully closed state, and the slide door 2 moves rearward of the vehicle while moving outward in the vehicle widthwise direction. Similarly, in the photoelectric sensor 7 provided in each side portion in the rear spoiler 5, the optical axes are set to indicate the characters "open" and "close" on the ground surface outward of the corner design surface of the rear side of the vehicle body 1 (the outside surface of the corner of a rear bumper). This is to prevent the tail door 3 from interfering with the object (the body or baggage of the user) that blocked the radiation light, in particular, when the tail door 3 is opened or closed.

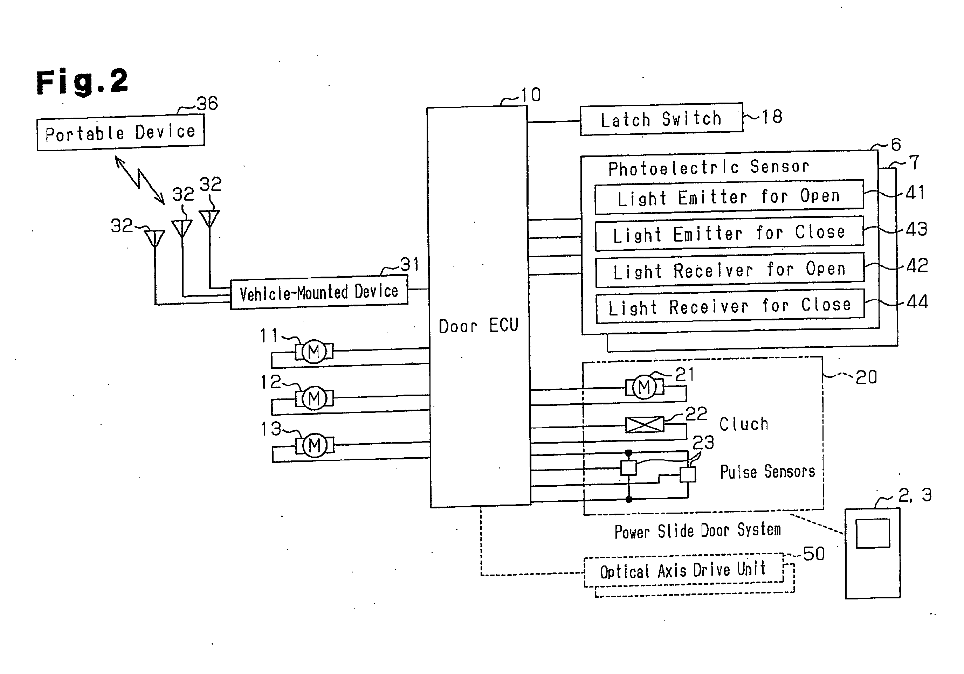

The electrical configuration of the present embodiment will now be described. As shown in Fig. 2, a door ECU (Electronic Control Unit) 10 mounted on the vehicle body 1 is mainly configured by, for example, a microcontroller (MCU), and is electrically connected to drive sections, which are door drive units 20 in this embodiment, also mounted on the vehicle body 1. The door drive units 20 are configured to selectively open and close the slide doors 2 and the tail door 3. That is, the door drive units 20 are provided separately corresponding to the slide doors 2 and the tail door 3, and each door drive unit 20 is linked to corresponding one of the slide doors 2 and the tail door 3 via an appropriate transmission mechanism (not shown). The door ECU 10 selectively opens and closes the slide doors 2 and the tail door 3 with electricity by controlling the associated door drive units 20.

That is, each door drive unit 20 includes a door motor 21, an electromagnetic clutch 22, and a pair of pulse sensors 23. The door ECU 10 is configured to drive the door motors 21 to control the opening and closing operation of the slide doors 2 and the tail door 3. Also, the door ECU 10 controls each electromagnetic clutch 22 to connect and disconnect power transmission between a door motor 21 and the corresponding one of the slide doors 2 and the tail door 3. This is to allow smooth opening and closing operation by connecting the power transmission only when electrically opening or closing the slide door 2 or the tail door 3, and disconnecting the power transmission when manually opening or closing the slide door 2 or the tail door 3. Furthermore, the door ECU 10 detects the rotation direction (forward or reverse rotation) of the door motor 21 (precisely, the output shaft of the electromagnetic clutch 22), and the rotation amount and the rotational speed, that is, the open/close position and the open/close speed of the slide door 2 or the tail door 3 based on a pair of pulse signals having different phases from each other output from both pulse sensors 23. Then, the door ECU 10 controls opening and closing operation of each of the slide doors 2 and the tail door 3 by the associated door drive unit 20 based on the pulse signals from the pulse sensors 23.

Furthermore, the door ECU 10 is electrically connected to release motors 11 and closure motors 12. The release motors 11 and the closure motors 12 are also separately provided corresponding to each of the slide doors 2 and the tail door 3, and are linked to latch mechanisms (not shown), which hold the slide doors 2 and the tail door 3 in a fully closed state (also in a fully opened state in the case with the slide doors 2) via an appropriate transmission mechanism. Each release motor 11 releases the corresponding one of the slide doors 2 and the tail door 3 held in the fully closed state by the latch mechanism (also in the fully opened state in the case with the slide doors 2) by transmitting the power to the associated latch mechanism. Thus, the slide doors 2 and the tail door 3 are each shifted from the fully closed state to a ready-to-open state (furthermore, the slide doors 2 are each shifted from the fully opened state to a ready-to-close state). By transmitting the power to the latch mechanism, each closure motor 12 holds the corresponding one of the slide door 2 and the tail door 3 that is ajar in the fully closed state by the latch mechanism.

In addition, the door ECU 10 is electrically connected to the photoelectric sensors 6, 7 (the first light emitters 41, the second light emitters 42, the first light receivers 43, and the second light receivers 44). The door ECU 10 outputs drive signals to the first light emitter 41 and the second light emitter 42 of each of the photoelectric sensors 6, 7 so that the first light emitter 41 and the second light emitter 42 emit light. At this time, both of the characters "open" and "close" are displayed on the ground surface as described above. Thus, the first light receiver 43 and the second light receiver 44 of the photoelectric sensors 6, 7 receive the reflected light, which is the radiation light of the first light emitter 41 and the second light emitter 42 reflected from the ground surface.

The first light receiver 43 and the second light receiver 44 of the photoelectric sensors 6, 7 generate a detection signal upon receipt of the reflected light. The door ECU 10 controls opening and closing operation of a slide door 2 or the tail door 3 by the associated door drive unit 20 based on the detection signal. That is, the door ECU 10 stores, as an initial value, the input level of both detection signals of the first light receiver 43 and the second light receiver 44 immediately after the first light emitter 41 and the second light emitter 42 have started to emit light and successively obtains the input level of both detection signals thereafter. If there is variation in each input level from the initial value by a certain level or more, the door ECU 10 detects that the radiation light displaying the character "open" or "close" from the first light emitter 41 or the second light emitter 42 has been blocked, or detects the intention of the user to open or close the slide door 2 or the tail door 3. Then, the door ECU 10 controls the opening and closing operation of the slide door 2 or the tail door 3 to match with the detected motion related to the intention of the user, that is, the opening or closing operation of the slide door 2 or the tail door 3.

Also, the door ECU 10 is electrically connected to a latch switch 18 provided in each latch mechanism. The door ECU 10 controls the opening and closing operation of the slide door 2 or the tail door 3 by the associated door drive unit 20 based on the detection signal from the latch switch 18 corresponding to the operation position of the latch mechanism. The operation position of the latch mechanism includes the position at which the slide door 2 or the tail door 3 is held in the fully closed state (further in the fully opened state in the case with the slide door 2), the position where the door is held ajar, and the position at which holding of the slide door 2 or the tail door 3 is cancelled.

Furthermore, the door ECU 10 is electrically connected to door lock motors 13. Each door lock motor 13 is linked to a mechanism part, which can selectively engage and disengage the outside door handle 4 of a slide door 2 with the associated latch mechanism, via an appropriate transmission mechanism. The door lock motor 13 transmits its power to the mechanism part to shift between a state in which the manipulation force of the outside door handle 4 can be transmitted to the latch mechanism of the slide door 2 and a state in which the manipulation force cannot be transmitted, that is, between an unlocked state and a locked state of the slide door 2. The door ECU 10 controls shifting between the unlocked state and the locked state by the door lock motor 13.

In contrast, the door ECU 10 is electrically connected to a vehicle-mounted device (vehicle-mounted wireless terminal) 31 mounted on the vehicle body 1. The vehicle-mounted device 31 is electrically connected to antennas 32 located at positions different from each other on the vehicle body 1. The vehicle-mounted device 31 configures a wireless communication system with a portable device (portable wireless terminal) 36 that the user carries. When the user of the vehicle who holds the portable device 36 approaches the vehicle within a certain area, the vehicle-mounted device 31 detects that user authentication is available as the receiving level of the received signal of either of the antennas 32 exceeds a predetermined level. The certain area includes ranges A1, A2, which are on both sides of the vehicle extending outward about the center pillar of the vehicle, and a range A3, which is on the rear side of the vehicle extending outward about the center of the tail door 3 as shown in Fig. 1. When detecting that the user authentication is available, the vehicle-mounted device 31 also determines in which of the ranges A1 to A3 the receiving level exceeds the predetermined level, that is, in which of the ranges A1 to A3 the portable device 36 is located.

Furthermore, when the user authentication is available, the vehicle-mounted device 31 authenticates that an authorized user has approached the vehicle if the verification of the ID signals between the portable device 36 and the vehicle-mounted device 31 matches with each other. Then, the vehicle-mounted device 31 transmits, to the door ECU 10, that the user authentication is available, the verification result of the ID code, and the determination result of where the portable device 36 is located. The door ECU 10 controls the opening and closing operation of the slide door 2 or the tail door 3 by the associated door drive unit 20 based on signals from the vehicle-mounted device 31.

The manner in which the door ECU 10 controls the door drive unit 20, the release motor 11, the closure motor 12, and the door lock motor 13 will now be described. The procedure is executed when the user authentication is available, that is, when the user is in the vicinity of the vehicle.

As shown in Fig. 4, when the procedure is shifted to this routine, in step S1, the door ECU 10 determines whether the user authentication is successful. For determination of whether the authentication is successful, the door ECU 10 transmits, to the vehicle-mounted device 31, a request signal requiring to respond and send the verification result of the ID code (successful or failed) with the portable device 36. Upon receipt of a response signal indicating the verification result of the ID code from the vehicle-mounted device 31, the door ECU 10 determines whether the authentication is successful. In step S1, the door ECU 10 waits until it is determined that the authentication is successful, and in step S2, the door ECU 10 drives all the first light emitters 41 and second light emitters 42 of the photoelectric sensors 6, 7 located in the outside door handles 4 and the rear spoiler 5.

Subsequently, in step S3, the door ECU 10 waits until the radiation light of either of the first light emitter 41 or the second light emitter 42 of the photoelectric sensors 6, 7 is blocked. Then, in step S4, the door ECU 10 checks whether the position where the radiation light is blocked matches with the position where the ID verification is performed, that is, where the portable device 36 is located. This is to avoid detecting a foreign object (for example, a dog or a cat) that blocks the radiation light after authentication has succeeded. In step S5, the door ECU 10 determines from which of the first light emitter 41, which indicates the character "open", and the second light emitter 42, which indicates the character "close", the blocked radiation light is emitted.

If the blocked radiation light is radiated from the first light emitter 41, the door ECU 10 proceeds to step S6 and controls the associated door drive unit 20 to open the door (the slide door 2 or the tail door 3) that matches with the position of the portable device 36. Thus, the door is fully opened. In this case, if the door (the slide door 2 or the tail door 3) is in the fully closed state, the door ECU 10 controls the release motor 11 to release holding of the door in the fully closed state by the latch mechanism prior to starting the opening operation of the door. In particular, if the target of the opening operation is the slide door 2 that is in the locked state, the door ECU 10 controls the door lock motor 13 to switch to the unlocked state even before starting to release the latch mechanism.

In contrast, if the blocked radiation light is radiated from the second light emitter 42, the door ECU 10 proceeds to step S7 and controls the associated door drive unit 20 to close the door (the slide door 2 or the tail door 3) that matches with the position of the portable device 36. In particular, if the target of the closing operation is the slide door 2 and is in the fully opened state, the door ECU 10 controls the release motor 11 to release holding of the slide door 2 in the fully opened state by the latch mechanism prior to closing the slide door 2. Also, when the door (the slide door 2 or the tail door 3) reaches the ajar state according to the closing operation, the door ECU 10 controls the closure motor 12 to hold the door in the fully closed state by the latch mechanism. Thus, the door is fully closed. In particular, if the target of the closing operation is the slide door 2, the door ECU 10 controls the door lock motor 13 to switch to the locked state upon completion of the movement to the fully closed state.

When the process of step S6 or S7 is completed, the door ECU 10 terminates the procedure. Thus, the door (the slide door 2 or the tail door 3) is brought into the fully opened state or the fully closed state in accordance with the blocked radiation light.

The operation of the present embodiment will now be described.

First, assume that the user authentication is available, and the authentication of the authorized user is successful. In this state, all the first light emitters 41 and the second light emitters 42 of the photoelectric sensors 6, 7 located in the outside door handles 4 and the rear spoiler 5 are activated. Thus, the characters "open" and "close" are displayed on the ground surface outward of the side design surfaces of the vehicle body 1 and outward of the corner design surfaces of the rear side of the vehicle body 1. Simultaneously, the first light receivers 43 and the second light receivers 44 of the photoelectric sensors 6, 7 receive reflected light of the radiation light of the first light emitters 41 and the second light emitters 42 reflected from the ground surface and generate detection signals.

In this state, when the user blocks the radiation displaying the character "open" from the first light emitter 41 or the radiation displaying the character "close" from the second light emitter 42 by any region of his/her body such as the feet or a baggage that he/she carries, the input level of the detection signal generated by the first light receiver 43 or the second light receiver 44 changes from the initial value since the reflection position of the radiation light of the first light emitter 41 or the second light emitter 42 is changed. The changes in the input level are detected as the intention of the user to open or close the slide door 2 or the tail door 3, and the opening and closing operation of the slide door 2 or the tail door 3 is controlled in the aforementioned manner. That is, for example, even if both hands are full, the user can selectively open and close the slide door 2 or the tail door 3 by blocking the radiation light of the character "open" or "close" nearby in accordance with his/her intention.

In this case, it is a precondition that the position where the change in the input level of the detection signal generated by the first light receiver 43 or the second light receiver 44, that is, the intention of the user is detected matches with the position where the portable device 36 is located. Thus, even if a foreign object (for example, a dog or a cat) blocks the radiation light of the character "open" or "close" at a position where the user does not exist, the slide door 2 or the tail door 3 is not opened or closed.

As described above, the present embodiment has the following advantages.
(1) When the user blocks the radiation light of the displayed character "open" or "close" to open or close the slide door 2 or the tail door 3, the level of the reflected light changes accordingly. The photoelectric sensors 6, 7 detect the intention of the user to open or close the slide door 2 or the tail door 3 through changes in the level of the reflected light. Then, the door ECU 10 controls a door drive unit 20 to open or close the slide door 2 or the tail door 3 in accordance with the detected intention of the user. In this case, since blocking of the radiation light of the character "open" or "close" is possible with any region of the body of the user such as the feet or a baggage that the user carries even if both hands of the user are full, the slide door 2 or the tail door 3 is selectively opened or closed in accordance with the intention of the user.
(2) The character "open" or "close" is displayed outward of the design surface of the vehicle body 1 (both sides and the rear portion). Thus, the body of the user that blocked the radiation light of the character "open" or "close" is further separated from a path of the opening and closing operation of the slide door 2 or the tail door 3. Therefore, when opening or closing the slide door 2 or the tail door 3 by the associated door drive unit 20, the number of cases is minimized where the slide door 2 or the tail door 3 contacts the body of the user that blocked the radiation light of the character "open" or "close". Also, since the user can block the radiation light of the character "open" or "close" by coming close to the design surface of the vehicle body 1 to some extent, constraints on the user in blocking the radiation light are reduced. Thus, for example, a user on a wheelchair or a user who has difficulty in moving the feet can also clearly transmit his/her intention to open or close the slide door 2 or the tail door 3.
(3) Upon detection of the intention of the user to open or close the slide door 2 or the tail door 3, the opening operation or the closing operation of the door is permitted only when matching with the position of the identified portable device 36 (that is, the user), so that erroneous operation caused by blocking of the radiation light of the character "open" or "close" by a foreign object is avoided.
(4) Even if the slide door 2 or the tail door 3 is stopped in a half opened state, or if the opening operation or the closing operation is stopped in the middle, the slide door 2 or the tail door 3 is selectively opened or closed in accordance with the intention of the user by blocking the radiation light of the character "open" or "close" again.
(5) Since the focused-beam reflective type photoelectric sensors 6, 7 are employed, the character "open" or "close" is displayed by irradiation at a specific position reducing the influence of surrounding objects. Thus, the detection range of the intention of the user is limited to a narrower range, thereby preventing erroneous operation due to a cause other than conscious motion of the user. Also, the detection accuracy is improved as compared to a diffuse reflective type photoelectric sensor. Furthermore, the present embodiment omits a process for aligning the optical axes during installation, and reduces the mounting space.
(6) The slide door 2 or the tail door 3 is selectively opened or closed with a very simple operation as to block the radiation light of the character "open" or "close" with any region of the body of the user such as the feet or an object such as a baggage that the user carries.

The above described embodiment may be modified as follows.

As shown in Fig. 2, an optical axis drive section, which is an optical axis drive unit 50, may be provided that drives optical axes of the first light emitter 41 and the second light emitter 42 of the photoelectric sensors 6, 7. In this case, the characters "open" or "close" indicated on the ground surface can be moved by controlling the optical axis drive unit 50 by the door ECU 10 during radiation of light by the photoelectric sensors 6, 7. Thus, the character "open" or "close" is visually checked by the user more easily.

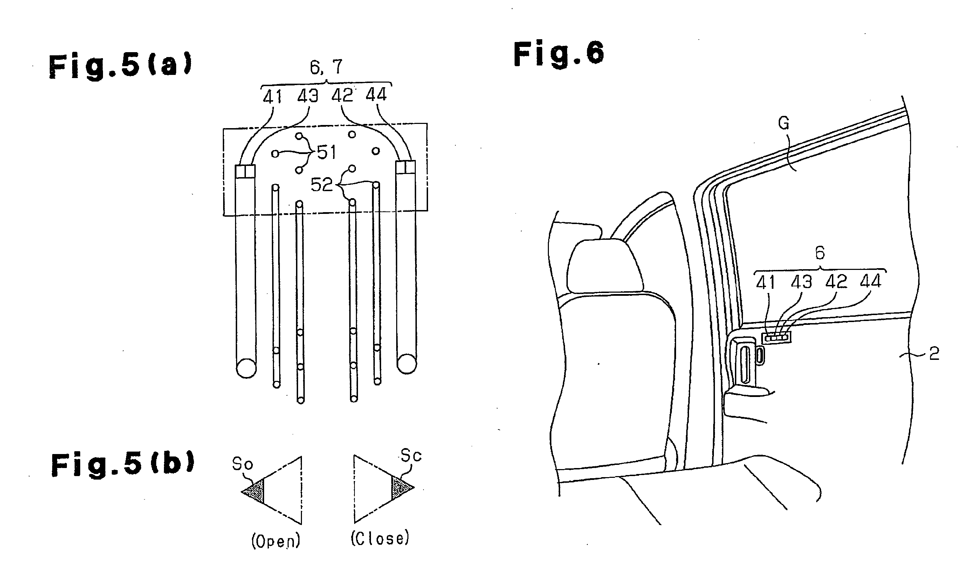

As shown in Fig. 5(a), light emitting diodes (LED) 51 (the number of which is five, for example) may be provided as light sources different from the first light emitters 41 of the photoelectric sensors 6, 7, and light emitting diodes 52 (the number of which is five, for example) may be provided as light sources different from the second light emitters 42 of the photoelectric sensors 6, 7. Then, the first light emitter 41 and the light emitting diodes 51 may be collectively arranged along the contour of an arrow (triangle) indicating the opening operation of the slide door 2 or the tail door 3. The second light emitter 42 and the light emitting diodes 52 may be collectively arranged along the contour of an arrow (triangle) indicating the closing operation of the slide door 2 or the tail door 3.

In this case, the first light emitter 41 and the light emitting diodes 51 cooperate and display the arrow as a sign indicating the opening operation of the slide door 2 or the tail door 3 on the ground surface. Similarly, the second light emitter 42 and the light emitting diodes 52 cooperate and display the arrow as a sign indicating the closing operation of the slide door 2 or the tail door 3 on the ground surface. That is, a sign indicating the opening operation or the closing operation of the slide door 2 or the tail door 3 may be configured by the light radiated (or projected) from the light emitters 41, 42 (the photoelectric sensors 6, 7) and the light radiated (or projected) from the light emitting diodes 51, 52. According to this modification, as compared to the case in which the sign indicating the opening operation or the closing operation of the slide door 2 or the tail door 3 is displayed by light radiation (or light projection) with only the photoelectric sensors 6, 7, the detection zone of the photoelectric sensors 6, 7 can be reduced. This improves the detection accuracy of the photoelectric sensors 6, 7.

Further, the light radiated (or projected) from the photoelectric sensors 6, 7 and the light radiated (or projected) from the light emitting diodes 51, 52 may have different shapes and/or colors from each other. More specifically, the light radiated (or projected) from the photoelectric sensors 6, 7 may be set greater than the light radiated (or projected) from the light emitting diodes 51, 52, or the colors may be set differently. Alternatively, as shown in Fig. 5(b), the light radiated (or projected) from the photoelectric sensors 6, 7 may be substantially triangular shapes So, Sc, which imply the opening operation or the closing operation of the slide door 2 or the tail door 3. According to this modification, since the light radiated (or projected) from the photoelectric sensors 6, 7 and the light radiated (or projected) from the light emitting diodes 51, 52 are easily distinguished, the operability of the user is improved.

As shown in Fig. 6, the photoelectric sensor 6 may be arranged at any appropriate position (the upper section of a door trim in this example) on the indoor side of the slide door 2 to perform light radiation (or light projection) toward a window glass G of the slide door 2. Alternatively, the photoelectric sensor 6 may be arranged at any appropriate position on the indoor side of the vehicle body 1 to perform light radiation (or light projection) toward the window glass G of the slide door 2. The modification prevents dust or dirt from adhering to the photoelectric sensor 6, and deterioration of the detection accuracy of the photoelectric sensor 6 is reduced.

In the present embodiment, the photoelectric sensors 6, 7 may display at least part of the sign indicating the opening operation or the closing operation of the slide door 2 or the tail door 3 on the design surface of the vehicle body 1. According to this modification, the distance between the photoelectric sensors 6, 7 and the position where the light is irradiated is reduced as compared to the case in which the light is irradiated on the ground surface, and the detection accuracy of the photoelectric sensors 6, 7 is improved as compared to the case in which the light is irradiated on the ground surface.

In the present embodiment, if the beams of radiation light of the characters "open" and "close" are both blocked, the door ECU 10 may stop the opening operation or the closing operation of the slide door 2 or the tail door 3 by the associated door drive unit 20. In this case, the user can stop the operation at any time by blocking the beams of radiation light of both the characters "open" and "close" during the opening operation or the closing operation of the slide door 2 or the tail door 3. Thus, for example, a process for avoiding catching something in the slide door 2 or the tail door 3 is promptly performed. In particular, in the case with the photoelectric sensors 6 mounted in the outside door handles 4, the user can stop the operation by blocking the beams of radiation light of both the characters "open" and "close" with a simple manipulation of only gripping the associated outside door handle 4 during the opening operation or the closing operation of the slide door 2 or the tail door 3.

In the present embodiment, the photoelectric sensors 6 may be mounted in the slide doors 2 to reduce influence of disturbance such as sunlight. Then, some work may be done such as adhering a light shielding film around each photoelectric sensor 6 on the window glass of the associated slide door 2.

In the present embodiment, the photoelectric sensors 6 may be located on the vehicle body 1 (for example, the upper edge of the opening portion of each slide door 2). The photoelectric sensors 7 may be located on the tail door 3.

In the present embodiment, in the case in which the photoelectric sensors are provided in the doors, the photoelectric sensors may be configured such that the movement of the irradiation position of the photoelectric sensor is kept small even when the door moves according to the opening or closing operation.

In the present embodiment, the first light emitters 41 and the second light emitters 42 of the photoelectric sensors 6, 7 may be light emitting diodes (LED). Also, the first light emitters 41 and second light emitters 42 of the photoelectric sensors 6, 7 preferably use blue, orange, green or red light that is easily discriminated by human eyes.

In the present embodiment, the first light emitters 41 and the second light emitters 42 of the photoelectric sensors 6, 7 may be anything that radiate light displaying arbitrary signs indicating the opening operation or the closing operation of the slide door 2 or the tail door 3. It is preferable that the signs visually appeal to the user.

In the present embodiment, the first light emitters 41 and the second light emitters 42 of the photoelectric sensors 6, 7 may project the signs indicating the opening operation or the closing operation of the slide door 2 or the tail door 3.

In the present embodiment, the first light receivers 43 and the second light receivers 44 of the photoelectric sensors 6, 7 may be configured by photodiodes.

In the present embodiment, the photoelectric sensors 6, 7 may be configured by one light emitter that radiates beams of light displaying both the characters "open" and "close", and the first light receiver 43 and the second light receiver 44, each receiving reflected light of the characters "open" and "close" from the ground surface.

In the present embodiment, the photoelectric sensors 6, 7 display the characters "open" and "close" in a complete manner. In contrast, the photoelectric sensors 6, 7 may display at least part of the characters "open" and "close" by light radiation or light projection. That is, as long as the user can recognize the characters, part of the characters "open" and "close" may be missing. Also, the photoelectric sensors 6, 7 may detect the change in the reflected light associated with blocking of at least part of the characters "open" and "close".

In the present embodiment, on the precondition that the authentication is successful, the characters "close" and "open" are always simultaneously displayed by radiation. The time at which the characters "open" and "close" are displayed may be the same, and may also be displayed one by one.

Alternatively, when the slide door 2 or the tail door 3 is at the fully opened position or the fully closed position, only one of the characters "close" and "open" may be displayed by radiation. Further, the characters "close" and "open" may be simultaneously displayed by radiation only when the movement of the slide door 2 or the tail door 3 is interrupted between the fully opened position and the fully closed position. Alternatively, the characters "close" and "open" may be simultaneously displayed by radiation during the opening operation or the closing operation of the slide door 2 or the tail door 3 between the fully opened position and the fully closed position. At this time, when at least one of the radiations for displaying the characters "open" and "close" is blocked, the door ECU 10 may stop the opening operation or the closing operation of the slide door 2 or the tail door 3 by the associated door drive unit 20. In this case, it is preferable to check whether the position where the radiation light is blocked matches with the position where the ID verification is performed, that is, where the portable device 36 is located before prior to interruption of the movement of the slide door 2 or the tail door 3.

To describe the control manner in more detail, in the flowchart of Fig. 4, when the radiation light of at least one of the first light emitter 41 and the second light emitter 42 of the photoelectric sensors 6, 7 is blocked (correspond to step S3) during the opening operation or the closing operation of the slide door 2 or the tail door 3 in the process of step S6, S7, the door ECU 10 checks whether the position where the radiation light is blocked matches with the position where the ID verification has been performed (correspond to step S4). Then, only when the position where the radiation light is blocked matches with the position where the ID verification has been performed, the door ECU 10 controls the associated door drive unit 20 to interrupt the movement of the slide door 2 or the tail door 3.

## Claims

1. A vehicle open/close body operating apparatus comprising:
a photoelectric sensor (6, 7) configured to be mounted on a vehicle, wherein the photoelectric sensor (6, 7) can display both of a sign indicating an opening operation and a sign indicating a closing operation of an open/close body (2, 3) of the vehicle by light radiation or light projection, and the photoelectric sensor (6, 7) is configured to detect an intention of a user to open or close the open/close body (2, 3) through changes in reflected light associated with blocking of the light radiated or projected to display either of the signs;
a drive section (20) configured to open or close the open/close body (2, 3); and
a control section (10) configured to control the drive section (20) to open or close the open/close body (2, 3) in accordance with the intention of the user detected by the photoelectric sensor (6, 7).

2. The vehicle open/close body operating apparatus according to claim 1, further comprising an optical axis driving section (51) for moving the displayed signs during the light radiation or light projection by the photoelectric sensor (6, 7).

3. The vehicle open/close body operating apparatus according to claim 1 or 2, further comprising:
a light source (52) different from the photoelectric sensor (6, 7),
wherein the displayed signs each include a beam of light radiated or projected from the photoelectric sensor (6, 7) and a beam of light radiated or projected from the light source.

4. The vehicle open/close body operating apparatus according to claim 3,
wherein the beam of light radiated or projected from the photoelectric sensor (6, 7) and the beam of light radiated or projected from the light source have different shapes and/or different colors from each other.

5. The vehicle open/close body operating apparatus according to any one of claims 1 to 4, wherein the photoelectric sensor (6, 7) performs light radiation or light projection downward of the vehicle.

6. The vehicle open/close operating apparatus according to claim 5, wherein the photoelectric sensor (6, 7) is arranged on at least one of side portions and a rear upper portion of a vehicle body (1), and the photoelectric sensor (6, 7) displays the signs outward of a design surface of the vehicle body (1).

7. The vehicle open/close operating apparatus according to claim 5, wherein the photoelectric sensor (6, 7) is arranged on at least one of a side portion and a rear upper portion of a vehicle body (1), and the photoelectric sensor (6, 7) displays the signs on a design surface of the vehicle body (1).

8. The vehicle open/close operating apparatus according to any one of claims 1 to 4, wherein the photoelectric sensor (6, 7) is arranged on the indoor side of a vehicle body (1) or the open/close body (2, 3), and the photoelectric sensor (6, 7) performs light radiation or light projection toward a window glass of the open/close body (2, 3).

9. The vehicle open/close body operating apparatus according to any one of claims 1 to 8, wherein the control section (10) permits opening and closing operation of the open/close body (2, 3) when the position where blocking of the light radiated or projected from the photoelectric sensor (6, 7) is detected matches with the position where the user exists.

10. The vehicle open/close body operating apparatus according to any one of claims 1 to 9, wherein, when the beams of light that are radiated or projected to display the signs are simultaneously blocked, the control section (10) stops the opening operation or the closing operation of the open/close body (2, 3) by the drive section (20).

11. The vehicle open/close body operating apparatus according to claim 6 or 7, wherein the photoelectric sensor (6, 7) is provided in an outside door handle (4) located on a side portion of the vehicle body (1).

12. The vehicle open/close body operating apparatus according to claim 6 or 7, wherein the photoelectric sensor (6, 7) is provided in a spoiler (5) located on the rear upper portion of the vehicle body (1).

## Patentansprüche

1. Betätigungsvorrichtung für einen Fahrzeug-Öffnungs-/Schließkörper, umfassend:
einen photoelektrischen Sensor (6, 7), der dafür konfiguriert ist, an einem Fahrzeug montiert zu werden, wobei der photoelektrische Sensor (6, 7) sowohl ein Zeichen, das einen Öffnungsvorgang eines Öffnungs-/Schließkörpers (2, 3) des Fahrzeugs anzeigt, als auch ein Zeichen, das einen Schließvorgang eines Öffnungs-/ Schließkörpers (2, 3) des Fahrzeugs anzeigt, durch Lichtabstrahlung oder Lichtprojektion anzeigen kann, und der photoelektrische Sensor (6, 7) dafür konfiguriert ist, eine Absicht eines Nutzers, den Öffnungs-/Schließkörper (2, 3) zu öffnen oder zu schließen, anhand von Veränderungen des reflektierten Lichts zu detektieren, zu denen es kommt, wenn das Licht, das abgestrahlt oder projiziert wird, um eines der Zeichen anzuzeigen, blockiert wird,
eine Antriebssektion (20), die dafür konfiguriert ist, den Öffnungs-/ Schließkörper (2, 3) zu öffnen oder zu schließen, und
eine Steuersektion (10), die dafür konfiguriert ist, die Antriebssektion (20) zu veranlassen, den Öffnungs-/Schließkörper (2, 3) gemäß der durch den photoelektrischen Sensor (6, 7) detektierten Absicht des Nutzers zu öffnen oder zu schließen.

2. Betätigungsvorrichtung für einen Fahrzeug-Öffnungs-/Schließkörper nach Anspruch 1, ferner umfassend eine Antriebssektion (51) für eine optische Achse, um die angezeigten Zeichen während der Lichtabstrahlung oder Lichtprojektion durch den photoelektrischen Sensor (6, 7) zu bewegen.

3. Betätigungsvorrichtung für einen Fahrzeug-Öffnungs-/Schließkörper nach Anspruch 1 oder 2, ferner umfassend:
eine Lichtquelle (52), die von dem photoelektrischen Sensor (6, 7) verschieden ist,
wobei die angezeigten Zeichen jeweils einen Lichtstrahl enthalten, der von dem photoelektrischen Sensor (6, 7) abgestrahlt oder projiziert wird, und einen Lichtstrahl enthalten, der von der Lichtquelle abgestrahlt oder projiziert wird.

4. Betätigungsvorrichtung für einen Fahrzeug-Öffnungs-/Schließkörper nach Anspruch 3, wobei der Lichtstrahl, der von dem photoelektrischen Sensor (6, 7) abgestrahlt oder projiziert wird, und der Lichtstrahl, der von der Lichtquelle abgestrahlt oder projiziert wird, voneinander verschiedene Formen und/oder voneinander verschiedene Farben haben.

5. Betätigungsvorrichtung für einen Fahrzeug-Öffnungs-/Schließkörper nach einem der Ansprüche 1 bis 4, wobei der photoelektrische Sensor (6, 7) eine Lichtabstrahlung oder Lichtprojektion von dem Fahrzeug aus nach unten ausführt.

6. Betätigungsvorrichtung für einen Fahrzeug-Öffnungs-/Schließkörper nach Anspruch 5, wobei der photoelektrische Sensor (6, 7) an Seitenabschnitten und/oder einem hinteren oberen Abschnitt einer Fahrzeugkarosserie (1) angeordnet ist, und der photoelektrische Sensor (6, 7) die Zeichen von einer Designoberfläche der Fahrzeugkarosserie (1) nach außen hin anzeigt.

7. Betätigungsvorrichtung für einen Fahrzeug-Öffnungs-/Schließkörper nach Anspruch 5, wobei der photoelektrische Sensor (6, 7) an einem Seitenabschnitt und/oder einem hinteren oberen Abschnitt einer Fahrzeugkarosserie (1) angeordnet ist, und der photoelektrische Sensor (6, 7) die Zeichen auf einer Designoberfläche der Fahrzeugkarosserie (1) anzeigt.

8. Betätigungsvorrichtung für einen Fahrzeug-Öffnungs-/Schließkörper nach einem der Ansprüche 1 bis 4, wobei der photoelektrische Sensor (6, 7) auf der Innenseite einer Fahrzeugkarosserie (1) oder des Öffnungs-/Schließkörpers (2, 3) angeordnet ist, und der photoelektrische Sensor (6, 7) eine Lichtabstrahlung oder Lichtprojektion in Richtung eines Fensterglases des Öffnungs-/Schließkörpers (2, 3) durchführt.

9. Betätigungsvorrichtung für einen Fahrzeug-Öffnungs-/Schließkörper nach einem der Ansprüche 1 bis 8, wobei die Steuersektion (10) einen Öffnungs- und Schließvorgang des Öffnungs-/Schließkörpers (2, 3) gestattet, wenn die Position, wo ein Blockieren des von dem photoelektrischen Sensor (6, 7) abgestrahlten oder projizierten Lichts detektiert wird, mit der Position übereinstimmt, wo sich der Nutzer befindet.

10. Betätigungsvorrichtung für einen Fahrzeug-Öffnungs-/Schließkörper nach einem der Ansprüche 1 bis 9, wobei, wenn die Lichtstrahlen, die abgestrahlt oder projiziert werden, um die Zeichen anzuzeigen, gleichzeitig blockiert werden, die Steuersektion (10) den Öffnungsvorgang oder den Schließvorgang des Öffnungs-/ Schließkörpers (2, 3) durch die Antriebssektion (20) stoppt.

11. Betätigungsvorrichtung für einen Fahrzeug-Öffnungs-/Schließkörper nach Anspruch 6 oder 7, wobei der photoelektrische Sensor (6, 7) in einem außenseitigen Türgriff (4) angeordnet ist, der sich an einem Seitenabschnitt der Fahrzeugkarosserie (1) befindet.

12. Betätigungsvorrichtung für einen Fahrzeug-Öffnungs-/Schließkörper nach Anspruch 6 oder 7, wobei der photoelektrische Sensor (6, 7) in einem Spoiler (5) angeordnet ist, der sich am hinteren oberen Abschnitt der Fahrzeugkarosserie (1) befindet.

## Revendications

1. Appareil d'actionnement de corps d'ouverture/fermeture de véhicule comportant :
un capteur photoélectrique (6, 7) configuré pour être monté sur un véhicule, le capteur photoélectrique (6, 7) pouvant afficher un signe indiquant une opération d'ouverture et un signe indiquant une opération de fermeture d'un corps d'ouverture/fermeture (2, 3) du véhicule par rayonnement de lumière ou projection de lumière, et le capteur photoélectrique (6, 7) étant configuré pour détecter une intention d'un utilisateur d'ouvrir ou fermer le corps d'ouverture/fermeture (2, 3) par l'intermédiaire de changements de la lumière réfléchie associés au blocage de la lumière rayonnée ou projetée afin d'afficher l'un ou l'autre des signes ;
une section d'entraînement (20) configurée pour ouvrir ou fermer le corps d'ouverture/fermeture (2, 3) ; et
une section de commande (10) configurée pour commander la section d'entraînement (20) afin d'ouvrir ou fermer le corps d'ouverture/fermeture (2, 3) en fonction de l'intention de l'utilisateur détectée par le capteur photoélectrique (6, 7).

2. Appareil d'actionnement de corps d'ouverture/fermeture de véhicule selon la revendication 1, comportant en outre une section d'entraînement d'axe optique (51) destinée à déplacer les signes affichés pendant le rayonnement de lumière ou la projection de lumière par le capteur photoélectrique (6, 7).

3. Appareil d'actionnement de corps d'ouverture/fermeture de véhicule selon la revendication 1 ou 2, comportant en outre :
une source de lumière (52) différente du capteur photoélectrique (6, 7),
dans lequel les signes affichés comprennent chacun un faisceau de lumière rayonnée ou projetée à partir du capteur photoélectrique (6, 7) et un faisceau de lumière rayonnée ou projetée à partir de la source de lumière.

4. Appareil d'actionnement de corps d'ouverture/fermeture de véhicule selon la revendication 3, dans lequel le faisceau de lumière rayonnée ou projetée à partir du capteur photoélectrique (6, 7) et le faisceau de lumière rayonnée ou projetée à partir de la source de lumière ont des formes différentes et/ou des couleurs différentes l'un par rapport à l'autre.

5. Appareil d'actionnement de corps d'ouverture/fermeture de véhicule selon l'une quelconque des revendications 1 à 4, dans lequel le capteur photoélectrique (6, 7) réalise le rayonnement de lumière ou la projection de lumière vers le bas du véhicule.

6. Appareil d'actionnement d'ouverture/fermeture de véhicule selon la revendication 5, dans lequel le capteur photoélectrique (6, 7) est disposé sur au moins une des parties latérales et d'une partie supérieure arrière d'une carrosserie de véhicule (1), et le capteur photoélectrique (6, 7) affiche les signes à l'extérieur d'une surface de conception de la carrosserie de véhicule (1).

7. Appareil d'actionnement d'ouverture/fermeture de véhicule selon la revendication 5, dans lequel le capteur photoélectrique (6, 7) est disposé sur au moins un d'une partie latérale et d'une partie supérieure arrière d'une carrosserie de véhicule (1), et le capteur photoélectrique (6, 7) affiche les signes sur une surface de conception de la carrosserie de véhicule (1).

8. Appareil d'actionnement d'ouverture/fermeture de véhicule selon l'une quelconque des revendications 1 à 4, dans lequel le capteur photoélectrique (6, 7) est disposé sur le côté intérieur d'une carrosserie de véhicule (1) ou le corps d'ouverture/fermeture (2, 3), et le capteur photoélectrique (6, 7) réalise le rayonnement de lumière ou la projection de lumière vers une vitre du corps d'ouverture/fermeture (2, 3).

9. Appareil d'actionnement de corps d'ouverture/fermeture de véhicule selon l'une quelconque des revendications 1 à 8, dans lequel la section de commande (10) permet une opération d'ouverture et de fermeture du corps d'ouverture/fermeture (2, 3) quand la position où le blocage de la lumière rayonnée ou projetée à partir du capteur photoélectrique (6, 7) est détectée correspond à la position où l'utilisateur se trouve.

10. Appareil d'actionnement de corps d'ouverture/fermeture de véhicule selon l'une quelconque des revendications 1 à 9, dans lequel, quand les faisceaux de lumière qui sont rayonnés ou projetés afin d'afficher les signes sont simultanément bloqués, la section de commande (10) arrête l'opération d'ouverture ou l'opération de fermeture du corps d'ouverture/fermeture (2, 3) par la section d'entraînement (20).

11. Appareil d'actionnement de corps d'ouverture/fermeture de véhicule selon la revendication 6 ou 7, dans lequel le capteur photoélectrique (6, 7) est prévu dans une poignée de porte extérieure (4) située sur une partie latérale de la carrosserie de véhicule (1).

12. Appareil d'actionnement de corps d'ouverture/fermeture de véhicule selon la revendication 6 ou 7, dans lequel le capteur photoélectrique (6, 7) est prévu dans un déflecteur (5) situé sur la partie supérieure arrière de la carrosserie de véhicule (1).
